# EUROPEAN PATENT APPLICATION

(11) **EP 4 838 622 A2**
(43) Date of publication of application: **11.11.2026**
(21) Application number: 26199315.8
(22) Date of filing: 30.11.2022
(51) Int. Cl.: H01M 10/42

(54) **ELECTRODE ASSEMBLY AND CYLINDRICAL BATTERY CELL, AND BATTERY PACK AND VEHICLE COMPRISING THE SAME**

(30) Priority: 30.11.2021 KR 20210168017; 25.04.2022 KR 20220051015
(62) Document number(s) of the earlier application(s) in accordance with Art. 76 EPC: 22901742.1 / 4 443 577
(71) Applicant: LG Energy Solution, Ltd., Seoul 07335 (KR)
(72) Inventor: YUN, Su Hyun, 34122 Daejeon (KR); JUNG, Bum Young, 34122 Daejeon (KR); LEE, Kwan Hee, 34122 Daejeon (KR); KIM, Jong Gu, 34122 Daejeon (KR)
(74) Representative: Goddar, Heinz J.

(57) **Abstract**

Provided is an electrode assembly (1) in which a first electrode (2), a first separation layer (3), a second electrode (4) and a second separation layer (3) in the state of being stacked are wound in a lengthwise direction, in a cylindrical shape, while surrounding a winding center, an active material is applied to both surfaces of the first electrode (2) to constitute a first electrode coated portion, an active material is not applied to an end portion of one side of the first electrode (2) in an axial direction (a widthwise direction) thereof to constitute a first electrode uncoated portion (21), an active material is applied to both surfaces of the second electrode (4) to constitute a second electrode coated portion (42), an active material is not applied to an end portion of the other side of the second electrode (4) in an axial direction (a widthwise direction) thereof to constitute a second electrode uncoated portion (41), and a predetermined section from a boundary portion between the second electrode coated portion (42) and the second electrode uncoated portion (41) to an end portion of the second electrode uncoated portion (41) is coated with an insulation material to form an insulation coating layer (45).

## Description

### TECHNICAL FIELD

This application claims priority to and the benefit of Korean Patent Application No. 10-2021-0168017 filed on November 30, 2021, and Korean Patent Application No. 10-2022-0051015 filed on April 15, 2022, the disclosures of which are incorporated herein by reference in their entireties.

The present disclosure relates to an electrode assembly, and a cylindrical battery cell, and a battery pack and a vehicle comprising the same.

### Background Art

To maximize efficiency of collecting current, a jelly roll-type electrode assembly, in which an anode tab and a cathode tab are respectively elongated vertically along the heightwise direction of a cell can, can be applied to a cylindrical secondary cell.

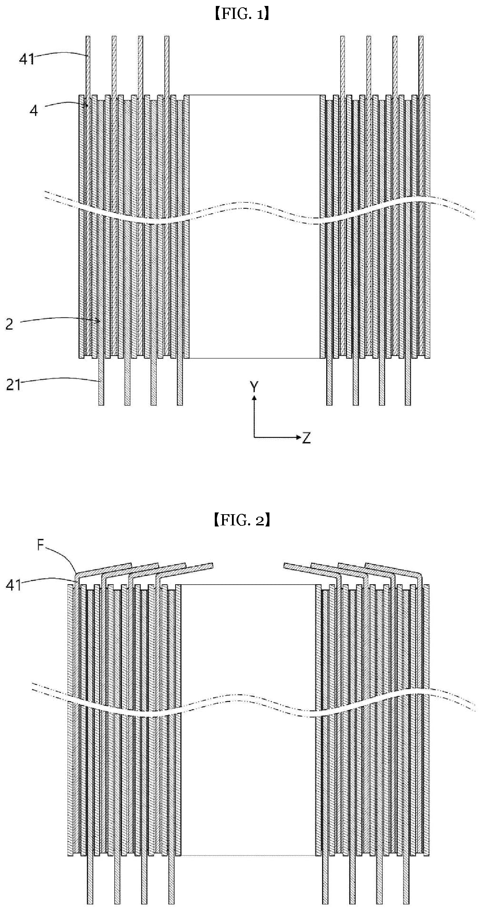

In the case of a jelly roll-type electrode assembly surrounding and winding electrode about a winding center, a first electrode uncoated portion 21 is exposed to the end portion of one side of the electrode assembly, and a second electrode uncoated portion 41 is exposed to the end portion of the other side of the electrode assembly, in the axial direction thereof, as illustrated in FIG. 1. Herein, suppose that the first electrode 2 is an anode while the second electrode 4 is a cathode, or vice versa.

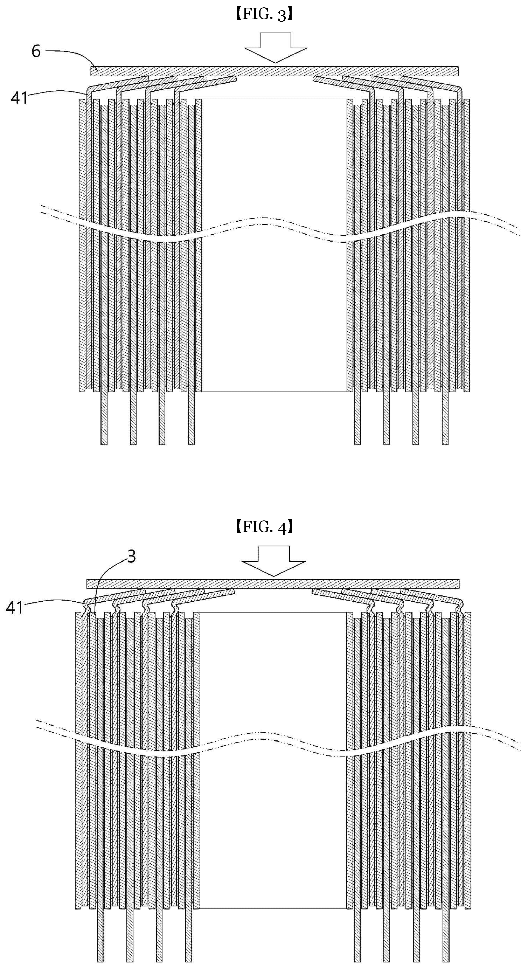

In recent years, a cell structure, in which an uncoated portion exposed to the end portion of an electrode assembly bends in the radial direction to constitute a planar surface as illustrated in FIG. 2, and a current collection plate 6 welds onto bent uncoated portions as illustrated in FIG. 3, has been developed.

However, while a second electrode current collection plate 6 is pressed against bent second electrode uncoated portions 41 to weld to the second electrode uncoated portions 41, the base end portion of the second electrode uncoated portion 41 is likely to be buckled, as illustrated in FIG. 4. At this time, even if a separation layer 3 is interposed between a first electrode 2 and a second electrode 4, the second electrode uncoated portion 41 contacts the first electrode 2 adjacent to the second electrode uncoated portion 41 and causes a short circuit, due to buckling.

Further, while the second electrode uncoated portion 41 welds to the second electrode current collection plate 6, welding heat can reach the separation layer of the electrode assembly, deforming the separation layer.

When a cylindrical secondary cell is used, an anode terminal protruding at the center of the electrode assembly faces upward, and a can constitutes a cathode. The anode tab connecting to the end portion of one side of a jelly roll-type electrode assembly in the axial direction thereof continues to face upward when the electrode assembly is distributed and used.

In other words, the end portion of the other side of the electrode assembly in the axial direction thereof faces downward. Thus, the second electrode uncoated portions 41 continues to be affected by a load in the axial direction in the situation where the second electrode uncoated portions 41 is pressed for welding and the electrode assembly is used. In particular, since a load that acts in the axial direction in the case where the electrode assembly is used is applied to the second electrode uncoated portion 41 bent and welded, the second electrode uncoated portion disposed inside the bent portion and elongated in the axial direction is vulnerable to buckling deformation.

Further, the buckling is likely to occur regardless of a method in which both electrodes connect by bending and welding a first electrode uncoated portion 21 or by using an electrode tab 7.

### DESCRIPTION OF INVENTION

### TECHNICAL PROBLEMS

The objective of the present disclosure is to provide an electrode assembly and a battery cell comprising the same in which the strength of the base end portion of an uncoated portion is ensured to prevent the buckling of the base end portion of the uncoated portion while the uncoated portion is pressed against a current collection plate in an axial direction.

The objective of the present disclosure is to provide an electrode assembly and a battery cell comprising the same that prevents the deformation of a separation layer even despite the occurrence of the buckling of the base end portion of an uncoated portion while the uncoated portion is pressed against a current collection plate in an axial direction.

The objective of the present disclosure is to provide an electrode assembly and a battery cell comprising the same that prevents a short circuit even if a buckled uncoated portion contacts an electrode of the other polarity, due to the buckling of a base end portion of the uncoated portion while the uncoated portion is pressed against a current collection plate in an axial direction.

The objective of the present disclosure is to provide an electrode assembly and a battery cell comprising the same that is resistant against buckling despite a load that is continuously applied to the uncoated portion because of the self-weight of the battery cell.

The objective of the present disclosure is to provide an electrode assembly and a battery cell comprising the same that prevents the damage or deformation of a separation layer, which is caused by heat generated while a bent uncoated portion welds.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### TECHNICAL SOLUTIONS

In an electrode assembly 1 of the present disclosure, a first electrode 2 and a second electrode 4 are wound in the state where the first electrode 2 and the second electrode 4 are stacked with a separation layer 3 therebetween, and the first electrode 2 is provided with a first electrode coated portion 22 that is an area where a first active material 23 is applied to the surface of a first electrode foil 20, while the second electrode 4 is provided with a second electrode coated portion 42 that is an area where a second active material 46 is applied to the surface of a second electrode foil 40.

The width of the second electrode coated portion 42 may be greater than the width of the first electrode coated portion 22, in an axial direction. Accordingly, the end portions of both sides of the second electrode coated portion 42 in the axial direction may be elongated further outward in the axial direction than the end portions of both sides of the first electrode coated portion 22 in the axial direction.

The second electrode 4 may be provided with a second electrode uncoated portion 41 to which an active material is not applied and which is provided in the end portion of one side of the second electrode 4 in an axial direction (a widthwise direction) thereof. A boundary portion between the second electrode coated portion 42 and the second electrode uncoated portion 41 may be disposed further inward in the axial direction than the end portion of the separation layer 3 in an axial direction thereof.

The thickness of the second electrode 4 may be less than the thickness of the first electrode 2.

The rigidity of a material for the second electrode 4 may be less than the rigidity of material for the first electrode 2.

The first electrode 2 may constitute an anode, and the second electrode 4 may constitute a cathode.

The first electrode 2 may be provided with a first electrode uncoated portion 21 that is an area where an active material is not applied to the end portion of the other side of the first electrode 2 in an axial direction thereof.

The second electrode uncoated portion 41's resistance against buckling may be less than the first electrode uncoated portion 21's resistance against buckling.

The length of the second electrode uncoated portion 41 in an axial direction thereof may be greater than the length of the first electrode uncoated portion 21 in an axial direction thereof.

The first electrode 2 may be provided with an electrode tab 7 that welds to an area where a first active material 23 is not coated, and protrudes from the other side of the first electrode 2 in the axial direction thereof.

The second electrode 4 is provided with an insulation coating layer 45 that is coated with an insulation material in a predetermined section from a boundary portion between the second electrode coated portion 42 and the second electrode uncoated portion 41 toward the end portion of the second electrode uncoated portion 41.

The insulation coating layer 45 may be provided in a way that an insulation liquid is coated or an insulation tape is attached.

The insulation coating layer 45 mat be elongated further outward in the axial direction than the end portion of the separation layer 3 in the axial direction thereof.

The insulation coating layer 45 may be thinner than the second electrode coated portion 42. Accordingly, the insulation coating layer 45 may be in light contact with the separation layer 3 or separated from the separation layer 3, while the second electrode coated portion 42 is in close contact with the separation layer 3.

The insulation coating layer 45 may cover a micro section 43 of the end portion of the second electrode coated portion 42 when covering the boundary portion between the second electrode coated portion 42 and the second electrode uncoated portion 41.

The thickness at which the insulation coating layer 45 is coated may remain constant in the axial direction.

The thickness at which the insulation coating layer 45 is coated may not remain constant in a partial section, in the axial direction.

The second electrode coated portion 42 adjacent to the boundary portion between the second electrode coated portion 42 and the second electrode uncoated portion 41 may be provided with a gliding portion the thickness of which decreases gradually toward the boundary portion. Complementarily, the thickness of the insulation coating layer 45 portion coated on the gliding portion may increase gradually toward the boundary portion.

The second electrode uncoated portion 41 may bend in a radial direction of the electrode assembly 1, in a predetermined position F, and the bend position F may be disposed further outward than the end portion of the separation layer 3 in the axial direction.

The insulation coating layer 45 may cover at least a part of the section from the boundary portion between the second electrode coated portion 42 and the second electrode uncoated portion 41 to the bend position F of the second electrode uncoated portion 41.

The insulation coating layer 45 may not cover the second electrode uncoated portion 41 by a predetermined gap G from the bend position F, in the axial direction.

The second electrode uncoated portion 41 may be provided with a notch part N that is formed inward from the end portion of the second electrode uncoated portion 41, in the axial direction, and a plurality of notch parts N may be spaced from one another along a perimeter direction (a lengthwise direction) of the second electrode 4.

A second electrode uncoated portion disposed between two notch parts N that are adjacent to each other in the perimeter direction may define the notch tab T.

The lengths of the notch tabs T in a circumferential direction thereof may remain constant. Alternatively, the lengths of the notch tabs T in the circumferential direction thereof may increase gradually or in stages, from the winding center side of the electrode assembly to the outer circumference side of the electrode assembly .

At the second electrode uncoated portion 41, the notch tab T may not be provided in a predetermined section at the end portion side of the winding center of the electrode assembly and/or at the end portion side of the outer circumference of the electrode assembly.

The notch tab T has a trapezoid shape in which a width decreases gradually from the base end portion toward the front end portion of the notch tab T. Alternatively, the notch tab T may have a variety of shapes such as a triangle, a half circle, a half oval, a parallelogram and the like.

The bend position F may be in the base end portion of the notch tab T.

According to the present disclosure, in the end portion of the second electrode 4, to which the second electrode uncoated portion 41 is exposed, in the axial direction, an insulation coating layer 45 is coated with an insulation material, in a predetermined section from the boundary portion between the second electrode coated portion 42 and the second electrode uncoated portion 41 toward the end portion of the second electrode uncoated portion 41.

The insulation coating layer 45 may cover a micro section of the end portion of the second electrode coated portion 42 when covering the boundary portion between the second electrode coated portion 42 and the second electrode uncoated portion 41. Accordingly, the boundary portion between the second electrode coated portion 42 and the second electrode uncoated portion 41 may be reinforced, and insulation in the portion may be ensured, more definitely.

The second electrode uncoated portion 41 may bend in a centripetal direction of the electrode assembly 1. At this time, the second electrode uncoated portion 41 may be provided with a bend inducing structure N, T that can induce a bend in a predetermined position F in the axial direction.

In the bend inducing structure N, T, a notch part N is formed in a way that the second electrode uncoated portion 41 is cut from the base end portion thereof in the axial direction, as much as the second electrode uncoated portion 41 needs to bend in the axial direction, and accordingly, the second electrode uncoated portion 41 is segmented to a notch tab T.

The bend inducting structure N, T may guide the bend position F of the second electrode uncoated portion 41.

The insulation coating layer 45 may cover at least a part of the section from the boundary portion between the second electrode coated portion 42 and the second electrode uncoated portion 41 to the bend position F.

The insulation coating layer 45 may be elongated further outward than the separation layer 3, in the axial direction. Accordingly, even if the base end portion of the second electrode uncoated portion 41 is buckled, the possibility that a short circuit between the second electrode uncoated portion 41 and the firs electrode 2 with the separation layer 3 therebetween may be excluded.

The insulation coating layer 45 may not cover up to the bend inducing structure 47 or the bend position completely, by a predetermined gap G. Accordingly, stress may not be delivered to the insulation coating layer 45 as a bend occurs in the bend position, damage to the insulation coating layer 45 may be prevented, and the buckling resistance of the insulation coating layer 45 is not affected.

The notch tab T may bend in the bend position F in the radial direction. The notch tab T may bend toward a centripetal direction. The notch tab T may also bend in a centrifugal direction.

Since the notch tab T bends, the surface of the tab, facing the axial direction, may weld to a second electrode current collection plate 6. The current collection plate 6 may weld to a bottom 301F of a cell can 301c or a cap 307.

The tab surface may directly weld to the bottom 301F of the cell can 301C or the cap 307, without a current collection plate.

The first electrode uncoated portion 21 provided in the end portion of the other side of the first electrode 2 in the axial direction thereof may be provided with a plurality of notch parts that is formed in a lengthwise direction, and the first electrode uncoated portion among the plurality of notch parts may constitute notch tabs.

The notch tab of the first electrode uncoated portion 21 may bend in the centripetal or centrifugal direction and weld to a first electrode current collection plate 5. The first electrode current collection plate 5 may weld to an electrode terminal 301R.

The electrode tab 7 of the first electrode 2 may weld to the electrode terminal 301R.

### ADVANTAGEOUS EFFECTS

According to the present disclosure, the base end portion of an uncoated portion is reinforced by an insulation coating layer, such that the buckling of the base end portion of the uncoated portion is prevented as the uncoated portion is pressed against a current collection plate in an axial direction.

According to the present disclosure, even if the base end portion of the uncoated portion is buckled while the uncoated portion is pressed against the current collection plate in the axial direction, the deformation of a separation layer is prevented, since the thickness of the insulation coating layer is less than the thickness of an electrode coated portion, and the insulation coating layer is spaced from the separation layer to some degree.

According to the present disclosure, even if the uncoated portion buckled caused by the buckling of the base end portion of the uncoated portion contacts an electrode of the other polarity while the uncoated portion is pressed against the current collection plate in the axial direction, a short circuit does not occur since the insulation coating layer is coated on the base end portion of the uncoated portion.

According to the present disclosure, the length at which the separation layer is elongated from a second electrode coated portion further outward in the axial direction can be decreased by the insulation coating layer. Accordingly, the end portion of the separation layer may be disposed further inward than a bent portion of a second electrode uncoated portion, in the axial direction. Thus, heat that is generated as a bent surface of the second electrode uncoated portion welds to a second electrode current collection plate or the bottom of a cell can or a cap can be prevented from affecting the end portion of the separation layer and deforming the separation layer.

A battery cell provided with the electrode assembly having the above structure ensures excellent reliability. The battery cell can be used as a battery for an electric vehicle that is exposed to vibrations or shocks continuously.

According to the present disclosure, a second electrode uncoated portion of a jelly roll-shaped electrode assembly bends in a radial direction and overlaps an adjacent second electrode uncoated portion. Accordingly, as the second electrode current collection plate is pressed, the base end portion of the second electrode uncoated portion, reinforced by the insulation coating layer, can be resistance against buckling. Further, despite the buckling of the second electrode uncoated portion, a short circuit between the second electrode uncoated portion and the first electrode can be prevented, since the insulation coating layer covers the buckled portion, enhancing reliability of a cylindrical secondary cell.

According to the present disclosure, various different effects can be produced, and the effects are described with reference to each embodiment. Additionally, description of effects readily inferred by one having ordinary skill in the art, and the like are omitted.

### BRIEF DESCRIPTION OF DRAWINGS

FIG. 1 is a schematic view showing a lateral surface of an electrode assembly wound in a jelly roll shape.
FIG. 2 is a schematic view showing that an uncoated portion of the electrode assembly in FIG. 1. bends in a radial direction and constitutes a planar surface.
FIG. 3 is a view showing that a current collection plate is pressed to weld to the planar surface in FIG. 2.
FIG. 4 is a view showing the buckling of the base end portion of the uncoated portion, which is caused by axiswise pressure.
FIG. 5 is a planar view showing an anode (a first electrode) used for an electrode assembly.
FIG. 6 is a planar view showing an example of a cathode (a second electrode) used for an electrode assembly, in the present disclosure.
FIG. 7 is a view showing an anode, a cathode and a separation layer that are viewed axially before the winding of the anode, the cathode and the separation layer, in the state where the anode, the cathode and the separation layer are stacked.

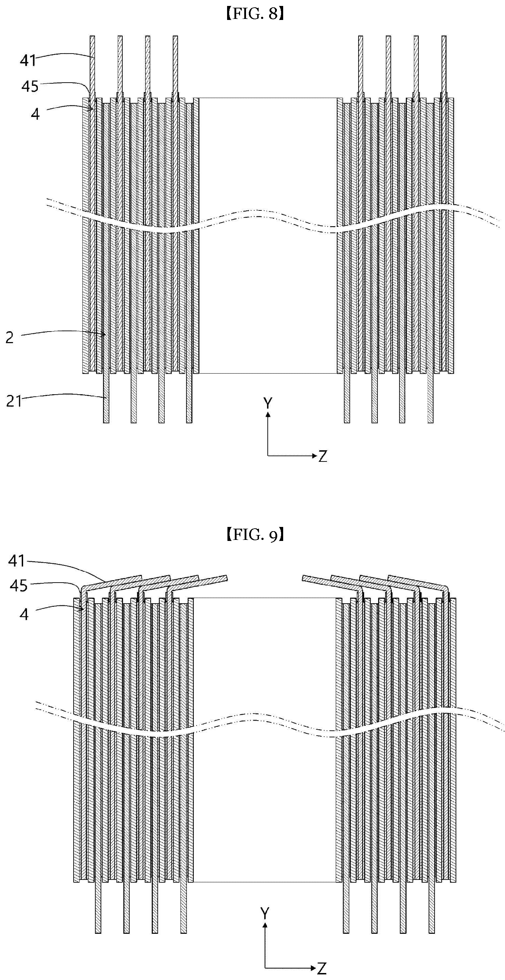

FIG. 8 is a lateral cross-sectional view showing an electrode assembly that is formed in a way that the stack in FIG. 7 is wound.
FIG. 9 is a lateral cross-sectional view showing that a cathode uncoated portion extending and sticking out of the axiswise end portion of the electrode assembly in FIG. 8. bends inward in the radial direction.
FIGS. 10 and 11 are enlarged views showing examples of the cathode uncoated portion of an electrode assembly.
FIG. 12 is a lateral cross-sectional view showing that a current collection plate welds to the bent uncoated portion in FIG. 9.
FIG. 13 is a planar view showing another example of a cathode in the present disclosure.
FIG. 14 is a lateral cross-sectional view showing an electrode assembly that is formed in a way that a stack to which the cathode in FIG. 13 is applied is wound.
FIG. 15 is a planar view showing another example of an anode.
FIG. 16 is a lateral cross-sectional view showing an electrode assembly that is formed in a way that a stack to which the anode in FIG. 15 is applied is wound.
FIG. 17 is a perspective view showing that a cathode uncoated portion extending and sticking out of the axiswise end portion of the electrode assembly in FIG. 14 or 16 bends inward in the radial direction.
FIG. 18 is a perspective view showing that a current collection plate welds respectively to the cathode uncoated portion and anode uncoated portion in FIG. 17.
FIG. 19 is a perspective view showing a battery cell that is manufactured in a way that a cell can accommodates the electrode assembly in FIG. 18.
FIG. 20 is a cross-sectional view showing the battery cell in FIG. 19.
FIG. 21 is a perspective view showing that a current collection plate welds to the anode uncoated portion in FIG. 17.
FIG. 22 is a perspective view showing a battery cell that is manufactured in a way that a cell can accommodates the electrode assembly in FIG. 21.
FIG. 23 is a lateral cross-sectional view showing an electrode assembly having an anode to which an additional electrode tab connects.
FIG. 24 is a perspective view showing a battery cell that is manufactured in a way that the battery cell accommodates the electrode assembly in FIG. 23.
FIG. 25 is a view showing a battery pack that is manufactured by using the battery cell in FIG. 19.
FIG. 26 is a view showing an electric vehicle equipped with the battery pack in FIG. 25.

### DESCRIPTION OF REFERENCE NUMERALS

1: Electrode assembly 2: First electrode (anode) 20: First electrode foil 21: First electrode uncoated portion 22: First electrode coated portion 23: First active material 3: Separation layer 4: Second electrode (cathode) 40: Second electrode foil 41: Second electrode uncoated portion F: Bending position G: Gap N: Notch part T: Notch tab 42: Second electrode coated portion 43: Micro section 45: Insulation coating layer 46: Second active material 5: First electrode current collection plate 6: Second electrode current collection plate 7: Electrode tab 300: Battery pack 301: Battery cell 301C: Cell can 301R: Electrode terminal (rivet terminal) 301F: Bottom 302: Housing 306: Gasket 307: Cap 308: Insulator 309: Vulnerable part B: Beating part C: Crimping part V: Vehicle Y Axial direction (widthwise direction) X Perimeter direction (lengthwise direction) Z Radial direction (tangential direction)

### DETAILED DESCRIPTION OF EXEMPLARY EMBODIMENTS

The above-described aspects, features and advantages are specifically described hereafter with reference to the accompanying drawings such that one having ordinary skill in the art to which the present disclosure pertains can embody the technical spirit of the disclosure easily. In the disclosure*,* detailed description of known technologies in relation to the subject matter of disclosure is omitted if it is deemed to make the gist of the disclosure unnecessarily vague*.* Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

Throughout the disclosure, each component can be provided as a single one or a plurality of ones, unless explicitly stated to the contrary.

When any one component is described as being "in the upper portion (or lower potion)" or "on (or under)" another component, any one component can be directly on (or under) another component, but an additional component can be interposed between any one component and another component on (or under) any one component.

When any one component is described as being "connected", "coupled", or "connected" to another component, any one component can be directly connected or coupled to another component, but an additional component can be "interposed" between the two components or the two components can be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

Hereafter, preferred embodiments in the present disclosure are described with reference to the accompanying drawings.

In the present disclosure, a direction in which an axis as the center of the winding of a jelly roll-shaped electrode assembly 1 extends is referred to as an axial direction Y, and a direction closer to the axis (a centripetal direction) or a direction farther from the axis (a centrifugal direction) is referred to as a radial direction Z, and a direction in which the axis is surrounded us referred to as a perimeter direction (a circumferential direction) X. The axial direction Y of the electrode assembly 1 may correspond to the widthwise direction Y of an electrode or a separation layer that constitutes a stack before winding, the perimeter direction X of the electrode assembly 1 may correspond to the lengthwise direction X of an electrode or a separation layer that constitutes a stack before winding, and the radial direction Z of the electrode assembly 1 may correspond to the normal direction of a sheet-shaped electrode or separation layer that constitutes a stack before winding.

A cylindrical secondary cell is manufactured in a way that an electrode assembly 1 wound in a jelly roll shape is built into a cylindrical cell can.

The electrode assembly 1 accommodated in the cylindrical cell can may be formed in a way that a sheet-shaped first electrode 2, a sheet-shaped first separation layer 3, a sheet-shaped second electrode 4, and a sheet-shaped second separation layer 3 are stacked one after another to form a stack, and wound along the lengthwise directions X of the sheets. Accordingly, the jelly roll-shaped electrode assembly 1 may be formed into a circular pipe that is thick and has a vacant winding axis portion. That is, the lengthwise direction of the roll sheet corresponds to the perimeter direction of the cylindrical electrode assembly 1, and the widthwise direction of the roll sheet corresponds to the axial direction of the electrode assembly 1. Additionally, the normal direction of the surface of the roll sheet corresponds to the radial direction of the electrode assembly 1.

The first electrode 2 may be an anode, while the second electrode 4 may be a cathode. The first separation layer 3 and the second separation layer 3 may be made of the same material, and be referred to as first and second ones respectively, to distinguish between the first separation layer 3 and the second separation layer 3 depending on the positions thereof in the stack.

The first electrode 2 and the second electrode 4 may have a predetermined width in the widthwise direction Y and be a rectangular metal foil that is elongated in the lengthwise direction X. For example, the first electrode 2 may be aluminum foil, while the second electrode 4 may be copper foil.

A first active material 23 is applied to both surfaces or one surface of the first electrode 2 to constitute a first electrode coated portion 22. In the same way, a second active material 46 is applied to both surfaces or one surface of the second electrode 4 to constitute a second electrode coated portion 42. The end portion of the other side of the second electrode 4 in the widthwise direction Y constitutes a second electrode uncoated portion 41 to which no active material is applied.

In one embodiment, an active material is applied to both surfaces of the first electrode 2 to constitute a first electrode coated portion 22, and the end portion of one side of the first electrode 2 in the widthwise direction Y constitutes a first electrode uncoated portion 21 to which no active material is applied.

Then, as illustrated, the first electrode uncoated portion 21 is exposed to the end portion of one side of the electrode assembly 1 in the axial direction while the second electrode uncoated portion 41 is exposed to the end portion of the other side of the electrode assembly 1 in the axial direction.

Anode active materials coated on an anode plate (a sheet constituting the first electrode) and cathode active materials coated on a cathode plate (a sheet constituting the second electrode) that are publicly known in the art may be used in an unlimited manner.

The anode active material may include a layered compound or compound substituted with one or more transition metals such as lithium cobalt oxide (LiCoO₂) and lithium nickel oxide (LiNiO₂); lithium manganese oxides (LiMnO₂) such as the chemical formula Li₁₊ₓMn₂ₓO₄ (where x is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni site type lithium nickel oxides expressed by the chemical formula LiNi₁₋ₓMₓO₂ (where M is Co, Mn, Al, Cu, Fe, Mg, B, or Ga and x is 0.01 to 0.3); lithium manganese composite oxides expressed by the chemical formula LiMn₂₋ₓMₓO₂ (where M=Co, Ni, Fe, Cr, Zn, or Ta and x=0.01 to 0.1) or Li₂Mn₃MO₈ (where M=Fe, Co, Ni, Cu, or Zn); LiMn₂O₄ in which Li in the formula is partially substituted with alkaline earth metal ions; a disulfide compound; and Fe₂(MoO₄)₃, or a compound whose main component is a lithium intercalation material such as a composite oxide formed by a combination thereof. Although the above types are used as the anode active material, the present invention is not limited thereto.

For example, the positive electrode current collector has a thickness of 3 to 500 µm. The positive electrode current collector is not particularly limited as long as it has conductivity without causing chemical changes in a battery. Examples of the positive electrode current collector may include stainless steel, aluminum, nickel, titanium, calcined carbon, or aluminum or stainless steel whose surface has been treated with carbon, nickel, titanium, silver, or the like. The electrode current collector may have fine irregularities formed in a surface thereof to increase the adhesion between the electrode current collector and the anode active material. The electrode current collector may be used in various forms such as a film, a sheet, a foil, a net, a porous body, a foamed body, a non-woven fabric body, and the like.

A conductive material may be additionally mixed with anode active material particles. The conductive material is added in an amount of 1 to 50 wt% based on the total weight of the mixture including the anode active material. The conductive material is not particularly limited as long as it has high conductivity without causing chemical changes in a battery. Examples of the conductive material may include graphite such as natural graphite and artificial graphite; carbon black such as carbon black, acetylene black, Ketjen black, channel black, furnace black, lamp black, and thermal black; conductive fibers such as carbon fiber and metal fiber; metal powders such as carbon fluoride, aluminum, and nickel powders; conductive whiskers such as zinc oxide and potassium titanate; conductive oxides such as titanium oxide; and conductive materials such as a polyphenylene derivative.

Further, the negative electrode sheet may be fabricated by applying and drying cathode active material particles on a negative electrode current collector, and may further include components such as the conductive material described above, a binder, a solvent, and the like as needed.

For example, the negative electrode current collector has a thickness of 3 to 500 µm. The negative electrode current collector is not particularly limited as long as it has conductivity without causing chemical changes in a battery. Examples of the negative electrode current collector may include copper, stainless steel, aluminum, nickel, titanium, calcined carbon, aluminum or stainless steel whose surface has been treated with carbon, nickel, titanium, silver, or the like, an aluminum-cadmium alloy, or the like. In addition, like the positive electrode current collector, fine irregularities may be formed in the surface to enhance the binding force of the cathode active material, and may be used in various forms such as a film, a sheet, a foil, a net, a porous body, a foamed body, a nonwoven fabric body, and the like.

Examples of the cathode active material may include a carbon such as non-graphitized carbon or graphite-based carbon; a metal complex oxide such as LiₓFe₂O₃ (0<=x<=1), LiₓWO₂ (0<=x<=1), SnₓMe₁₋ₓMe'yO_{z} (Me: Mn, Fe, Pb, Ge; Me' : Al, B, P, Si, elements in Group I, II, and III on the periodic table, a halogen; 0 <x<=1); 1<=y<=3; 1 <= z <= 8); a lithium metal; a lithium alloy; a silicon-based alloy; a tin-based alloy; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer such as polyacetylene; a Li-Co-Ni-based material, or the like.

A binder polymer capable of being used in the electrode sheets 11 and 12 is a component that assists in bonding the electrode active material particles and the conductive material and binding the electrode active material particles to the electrode current collector, and added in an amount of, for example, 1 to 50 wt% based on the total weight of the mixture including the electrode active material particles. Examples of the binder polymer may include at least one binder polymer selected from the group consisting of polyvinylidene fluoride-co-hexafluoropropylene (PVdF-HFP), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, or a mixture of two or more thereof, but the present invention is not limited thereto.

Non-limiting examples of the solvent used in the manufacturing of the electrodes include acetone, tetrahydrofuran, methylene chloride, chloroform, dimethylformamide, N-methyl-2-pyrrolidone (NMP), cyclohexane, water, or a mixture thereof. Such solvents provide an appropriate level of viscosity so that a slurry coating layer can be formed at a desired level on a surface of the electrode current collector.

The negative electrode may include a current collector; and a cathode active material layer located on at least one surface of the current collector and including a cathode active material, a binder polymer, and a conductive material, wherein the negative active material layer includes a lower layer region in surface contact with the current collector and an upper layer region extending to the surface of the cathode active material layer while in surface contact with the lower layer region. The lower layer region and the upper layer region may each independently include at least one of graphite and a silicon-based compound as an anode active material.

The lower layer region may include natural graphite as an anode active material, and the upper layer region may include artificial graphite as an anode active material.

Each of the lower layer region and the upper layer region may independently further include a silicon-based compound as an anode active material.

The silicon-based compound may include at least one of SiOₓ (0≤x≤2) and SiC.

In one embodiment, the negative electrode may be manufactured in a way that a slurry for a lower layer comprising a cathode active material for a lower layer is applied and dried on a current collector and a lower layer area is formed, and then a slurry for an upper layer comprising a cathode active material for an upper layer is applied and dried on the lower layer area and an upper layer area is formed.

Additionally, in one embodiment, the negative electrode may be manufactured based on a method comprising: preparing a slurry for a lower layer comprising a cathode active material for a lower layer, and a slurry for an upper layer comprising a cathode active material for an upper layer;

coating the slurry for a lower layer on one surface of a cathode plate, and at the same time or after predetermined time, coating the slurry for an upper layer on the slurry for a lower layer; and

drying the coated slurry for a lower layer and the coated slurry for an upper layer at the same time and forming an active material layer.

In the latter manufacturing method, there may be an intermixing region where active materials of different sorts are mixed, in a portion of the negative electrode, wherein the lower layer region and the upper layer region contact each other. In the case where the slurry for a lower layer comprising a cathode active material for a lower layer and the slurry for an upper layer comprising a cathode active material for an upper layer are coated on a current collector, at the same time or one after another with very little time between them, and then dried at the same time to form an active material layer, a predetermined intermixing section is formed on the interface where the slurry for a lower layer and the sully for an upper layer contact each other before they are dried, and then the intermixing section is formed into a layer of the intermixing region while the slurry for a lower layer and the slurry for an upper layer are dried.

In the cathode active material layer of one embodiment of the present disclosure, a weight ratio (or a ratio of loaded amount per unit surface area) between the upper layer region and the lower layer region may be 20:80 to 50:50, specifically, 25:75 to 50:50.

In the present disclosure, the thickness of the lower layer region and the upper layer region of the cathode active material layer may not definitely match the thickness of the coated slurry for a lower layer and the coated slurry for an upper layer. However, a ratio of the thickness of the lower layer region to the thickness of the upper layer region of the cathode active material layer in the present disclosure, finally obtained after drying or selective rolling, may match a ratio of the thickness of the coated slurry for a lower layer to the thickness of the coated slurry for an upper layer.

The first slurry is coated, and the second slurry is coated on the first slurry, at the same time, or one after another with a predetermined time difference between them. In one embodiment, the predetermined time difference may be 0.6 or less second, or 0.02 to 0.6 second, or 0.02 to 0.06 second, or 0.02 to 0.03 second. The time difference at a time of coating the first slurry and the second slurry is caused by a coating apparatus. It is preferable to coat the first slurry and the second slurry at the same time. A device such as a double slot die and the like may be used to coat the second slurry on the first slurry.

In the step of forming an active material layer, rolling the active material layer may be further included after the drying step. At this time, rolling may be performed based on a method such as roll pressing commonly used in the art, and for example, performed at 1 to 20 MPa and 15 to 30 °C.

The step of forming an active material layer by drying the coated slurry for a lower layer and the coated slurry for an upper layer at the same time is performed with a device where a hot air drier and an infrared drier are combined, based on a method commonly used in the art.

The weight% of a first binder polymer in the solids of the slurry for a lower layer may be the same or greater than the weight% of a second binder polymer in the solids of the slurry for an upper layer. In one embodiment, the weight% of the first binder polymer in the solids of the slurry for a lower layer may be 1.0 to 4.2 times, or 1.5 to 3.6 times, or 1.5 to 3 times greater than the weight% of the second binder polymer in the solids of the slurry for an upper layer.

In the case where a ratio of the weight% of the first binder in the coated slurry for a lower layer to the weight% of the second binder in the coated slurry for an upper layer is within the above-mentioned range, the separation of an electrode layer does not occur since the binder in the lower layer area is not that little, and the resistance of the upper layer portion of an electrode decreases, and rapid charge performance may improve, since the binder of the upper layer area is not that great.

In the solids of the slurry for a lower layer, the weight% of the first binder polymer may be 2 to 30 wt% or 5 to 20 wt% or 5 to 20 wt%, and in the solids of the slurry for an upper layer, the rate (wt%) of the second binder polymer may be 0.5 to 20 wt%, or 1 to 15 wt%, or 1 to 10 wt%, or 2 to 5 w%.

A total rate (wt%) of the first binder polymer and the second binder polymer in the entire solids of the slurry for a lower layer and the slurry for an upper layer may be 2 to 20 wt% or 5 to 15 wt%.

The first electrode 2 and the second electrode 4 may be stacked with the separation layer 3 therebetween. Additionally, an additional separation layer 3 may be stacked under the second electrode 4. As the first electrode 2 and the second electrode 4 are stacked, the first electrode coated portion 22 and the second coated portion 42 may overlap each other. The separation layer 3 may be disposed between the first electrode coated portion 22 and second electrode coated portion 42 areas, to prevent direct contact between the first electrode coated portion 22 and the second electrode coated portion 42.

A boundary portion between the first electrode uncoated portion 21 and the first electrode coated portion 22 may be disposed further inward than one widthwise end of the separation layer 3 in the widthwise direction, and the first electrode uncoated portion 21 may extend further outward than the one widthwise end of the separation layer 3 in the widthwise direction. A boundary portion between the second electrode uncoated portion 41 and the second electrode coated portion 42 may be disposed further inward than the other widthwise end of the separation layer 3 in the widthwise direction, and the second electrode uncoated portion 41 may extend further outward than the other widthwise end of the separation layer 3 in the widthwise direction.

The separator includes a porous polymer substrate, and a porous coating layer located on both surfaces of the porous polymer substrate and including inorganic particles and a binder polymer.

The porous polymer substrate may be a polyolefin-based porous substrate.

The polyolefin porous substrate may be in the form of a film or a non-woven web. By having the porous structure as described above, the electrolyte may be smoothly moved between the positive electrode and the negative electrode. The porous structure may increase an electrolyte impregnation property of the substrate itself so that excellent ion conductivity may be secured, and may prevent an increase in resistance inside an electrochemical device so that performance degradation of the electrochemical device may be prevented.

The polyolefin porous substrate used in the present invention may be any planar porous substrate that is generally used in electrochemical devices, and the material or shape thereof may be variously selected as desired.

The polyolefin porous substrate may include, but is not limited to, high density polyethylene, low density polyethylene, linear low density polyethylene, ultrahigh molecular weight polyethylene, or polypropylene, or may be a film or non-woven web formed of a mixture of two or more thereof.

The polyolefin porous substrate may have a thickness of 8 to 30 µm, but this is only an example, and the polyolefin porous substrate may also have a thickness that is out of the above range in consideration of mechanical properties or high-efficiency charge/discharge characteristics of a battery.

A woven fabric sheet in the present disclosure may be made of polyethylene (PE), polypropylene (PP), or a mixture of two or more thereof. For example, the woven fabric sheet may be manufactured based on fiber spinning. For example, the woven fabric sheet may be manufactured in a way that fibers of the above materials are fabric-spinned and mixing-spinned at a melting point or greater, based on melt blowing.

The woven fabric sheet may have an elongation rate of 200 to 400 %, preferably, 300 to 400 %. In the case of an elongation rate of less than 200 %, contact between an electrode and an electrode is highly likely to occur at a time when a nail penetrates, and in the case of an elongation rate of greater than 400 %, a surrounding portion where a nail penetrates is also elongated, and the separation layer becomes thin, resulting in a reduction in the barrier properties (blockability).

The woven fabric sheet has a plurality of pores having an average diameter of 0.1 to 10 µm. In the case of a pore having a size of less than 0.1 µm, a smooth flow of lithium ions and/or an electrolyte solution is not ensured, and in the case of a pore having a size of greater than 0.1 µm, contact between a positive electrode and a negative electrode may not be prevented, since the woven fabric sheet is elongated at a time when a nail penetrates.

Additionally, the woven fabric sheet may have porosity of 40 to 70 %. In the case of porosity of less than 40 %, a smooth flow of lithium ions and/or an electrolyte solution may not be ensured, and in the case of porosity of greater than 70 %, contact between a positive electrode and a negative electrode may not be prevented, since the woven fabric sheet is elongated at a time when a nail penetrates. The woven fabric sheet manufactured as described above may have permeability of 1 to 20 seconds/100 mL.

Further, the woven fabric sheet may have a thickness of 10 to 20 µm, and the numerical values are provided as an example. The woven fabric sheet may have a thickness outside the above-mentioned range of thicknesses, depending on the permeability of the woven fabric sheet.

The woven fabric sheet may be coupled to the components of the separation layer that is disposed under the woven fabric sheet, based on lamination. The lamination process may be performed at a temperature range of 100 to 150 °C.In the case where the lamination process is performed at less than 100 °C, the lamination effect is not produced, and in the case where the lamination process is performed at greater than 150 °C, a portion of the woven fabric melts.

Under the above-mentioned conditions, the lamination-coupled separation layer in one aspect ensures improvement in resistance against nail penetration, unlike a separation layer which is comprised of a conventional woven fabric sheet, or a separation layer in which a layer comprising inorganic particles is formed on at least one surface of a film or a woven fabric sheet.

In the porous coating layer, the inorganic particles bind one another in the state of being charged and contacting each other, with the help of the binder polymer. Accordingly, interstitial volume is formed among the inorganic particles, and the interstitial volume among the inorganic particles may be a vacant space and form a pore.

As an inorganic particle used to form the porous coating layer, inorganic particles, i.e., inorganic particles that cause no oxidation and/or reduction reaction within an operation voltage range (e.g., 0 to 5V with respect to Li/Li⁺) of an electrochemical element, may be further added. In the case where inorganic particles capable of delivering ions are used as the inorganic particle, an increase in the ion conductance in the electrochemical element may lead to improvement in performance. Additionally, in the case where inorganic particles having high permittivity are used as the inorganic particle, the inorganic particles having high permittivity may contributes to an increase in the dissociation of electrolyte salt, e.g., lithium salt, in liquid electrolytes, and improve ion conductance in an electrolyte solution.

For the above-mentioned reasons, the inorganic particle comprises a high-permittivity inorganic particle of a permittivity constant of 5 or greater, preferably, 10 or greater, an inorganic particle having the ability of deliver lithium ions, and a mixture thereof, preferably.

Unlimited examples of inorganic particles having a permittivity constant of 5 or greater comprise BaTiO₃, Pb(Zr,Ti)O₃(PZT), Pb₁₋ₓLaₓZr_{1-y}Ti_{y}O₃(PLZT), PB(Mg_{1/3}Nb_{2/3})O₃-PbTiO₃(PMN-PT), hafnia (HfO₂), SrTiO₃, SnO₂, CeO₂, MgO, NiO, CaO, ZnO, ZrO₂, Y₂O₃, Al₂O₃, TiO₂, SiC or a mixture thereof and the like.

In particular, inorganic particles such as BaTiO₃, Pb(Zr,Ti)O₃(PZT), Pb₁₋ₓLaₓZr_{1-y}Ti_{y}O₃(PLZT), PB(Mg_{1/3}Nb_{2/3})O₃-PbTiO₃(PMN-PT) and hafnia (HfO₂), described above, exhibit piezoelectricity indicating a potential difference between both surfaces, caused by the generation of charges in the case of elongation or compression based on the application of certain pressure, as well as permittivity indicating a permittivity constant of 100 or greater, thereby preventing an external impact-induced short circuit in two electrodes and ensuring improvement in the reliability of an electrochemical element. Additionally, in the case where the high permittivity inorganic particles and the inorganic particles having the ability to deliver lithium ions, described above, are mixedly used, the effect of preventing an external impact-induced short circuit and improving the reliability of an electrochemical element may be produced further.

The inorganic particles having the ability to deliver lithium ions do not store lithium, while containing lithium, and indicate inorganic particles moving lithium ions. The inorganic particles having the ability to deliver lithium ions can deliver and move lithium ions because of a sort of defect in their particle structures, resulting in improvement in the conductivity of lithium ions in a cell and enhancement in the performance of a cell. Un limited examples of the inorganic particles having the ability to deliver lithium ions comprise lithium phosphate (Li₃PO₄), lithium titanium phosphate (LiₓTi_{y}(PO₄)₃, 0<x<2, 0<y<3) lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0 < x < 4, 0 < y < 13) such as 14Li₂O-9Al₂O₃-38TiO₂-39P₂O₅ and the like, lithium lanthanum titanate (LiₓLa_{y}TiO₃, 0< x < 2, 0 < y < 3), lithium germanium thiophosphate (LiₓGe_{y}P_{z}S_{w}, 0 < x < 4, 0 < y <1, 0 < z < 1, 0 < w < 5) such as Li_{3.25}Ge_{0.25}P_{0.75}S₄ and the like, lithium nitride (LiₓN_{y}, 0 < x < 4, 0 < y < 2) such as Li₃N and the like, SiS₂-based glass (LiₓSi_{y}S_{z}, 0 < x < 3, 0 < y < 2, 0 < z < 4) such as Li₃PO₄-Li₂S-SiS₂ and the like, P₂S₅-based glass (LiₓP_{y}S_{z},0< x<3, 0<y<3, 0< z<7) such as LiI-Li₂S-P₂S₅ and the like, or a mixture thereof and the like.

The size of the inorganic particles of the porous coating layer is not limited, but preferably 0.001 to 10 µm, to form a coating layer of uniform thickness and ensure proper porosity. In the case of an inorganic particle having a size of less than 0.001 µm, the dispersibility of the inorganic particle may deteriorate, and in the case of an inorganic particle having a size of greater than 10 µm, the thickness of the porous coating layer increases, mechanical properties deteriorate. Additionally, an excessively large pore is highly likely to cause an internal short circuit at a time of charge and discharge of a cell.

The binder polymer forming the porous coating layer may comprise any one binder polymer selected from a group comprised of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose or a mixture of two or more thereof, but not be limited.

A composition ratio of an inorganic particle to a binder polymer, used for a porous coating layer, is within a range of 50:50 to 99:1, for example, and 70:30 to 95:5, preferably. In the case where the composition ratio of an inorganic particle to a binder polymer is less than 50:50, the polymer is included in large amounts, and the thermal reliability of a separation layer may fail to improve, and may cause a reduction in the vacant space formed among the inorganic particles, resulting in a decrease in the size of a pore and the porosity and deterioration in the performance of a final cell. In the case where the content of the inorganic particle is greater than 99 wt%, the binder polymer is included in very small amounts, and the peel resistance of a porous coating layer may deteriorate. The thickness of the porous coating layer is not limited but is preferably in a range of 0.01 to 20 µm. The pore size and porosity are not limited, but the pore size is preferably in a range of 0.001 to 10 µm, and the porosity is preferably in a range of 10 to 90 %. The pore size and porosity mainly depend on the size of an inorganic particle, and for example, in the case where an inorganic particle having a particle size of 1 µm or less is used, the size of a pore formed is also about 1 µm or less. The above-mentioned pore structure is filled with an electrolyte solution that is injected later, and the electrolyte solution delivers ions. In the case where the pore size and porosity is respectively less than 0.001 µm and 10 %, the layer acts as a resistance layer, and in the case where the pore size and porosity is respectively greater than 10 µm and 90 %, the mechanical properties of the layer may deteriorate.

The porous coating layer may be formed in a way that a binder polymer is dissolved or dispersed in a dispersion medium, inorganic particles are added to the dispersion medium, a slurry for forming a porous coating layer is obtained, and the slurry is coated and dried on at least one surface of a base material. Preferably, the dispersion medium has a solubility index similar to that of a binder polymer to be used, and has a low boiling point, to be readily removed after an even mixture. Unlimited examples of available dispersion media comprise acetone, tetrahydrofuran, methylene chloride, chloroform, dimethylformamide, N-methyl-2-pyrrolidone (NMP), cyclohexane, water or a mixture thereof and the like.

After inorganic particles are added to the dispersion solution where the binder polymer is dispersed in the dispersion medium, the inorganic particles are crushed, preferably. At this time, the inorganic particles are crushed for 1 to 20 hours, preferably, and the particle size of the crushed inorganic particles is preferably 0.001 to 10 µm, as described above. An ordinary method may be used to crush the inorganic particles, and in particular, ball milling is preferred.

Then the binder polymer dispersion solution in which the inorganic particles are dispersed is coated and dried on at least one surface of a porous polymer base material, at humidity of 10 to 80 %. The dispersion solution may be coated on the porous polymer base material, based on an ordinary coating method that is known in the art. For example, the ordinary coating method may comprise dip coating, die coating, roll coating, comma coating or a combination thereof.

Additives such as a conductive material and the like may be further added as a component of a porous coating layer, in addition to the above-described inorganic particle and binder polymer.

The separator according to the present invention may have a thickness of 1 to 100 µm or 5 to 50 µm. When the thickness of the separator is less than 1 µm, the function of the separator may not be sufficiently exhibited, and the deterioration of mechanical properties may occur. When the thickness of the separator is greater than 100 µm, battery characteristics may be deteriorated during high-rate charging/discharging. In addition, the separator may have a porosity of 40 to 60%, and may have an air permeability of 150 to 300 sec/100 ml.

In one embodiment of the present invention, the porous polymer substrate may use a polyethylene or polypropylene series. In addition, Al oxide and Si oxide-based coating materials may be used as inorganic particles in the porous coating layer.

When the separator in one embodiment of the present invention is used, since the porous coating layer is provided on both sides of the porous polymer substrate, a solid electrolyte interface layer may be uniformly formed due to the improvement of impregnation performance with respect to the electrolyte, and superior air permeability may be secured as compared to a conventional single-sided inorganic-coated separator. For example, the air permeability may be within 120 sec/100 cc. In addition, even when the inorganic porous coating layer is provided on both sides of the porous polymer substrate, a thickness comparable to that of the conventional single-sided inorganic-coated separator may be realized. For example, the thickness may be within 15.0 µm.

Further, when the separator in one embodiment of the present invention is used, the stability of the separator may be improved so that heat- and pressure-resistant properties may be secured. Specifically, it is possible to secure a heat-resistant property having a heat-shrinkage property of 5% or less at 180 °C and secure a puncture strength of 550 gf or more, and damage or penetration of the separator in a step portion may be prevented when core deformation occurs during a cycle of the battery in which the separator is employed.

The thickness of the first electrode 2 may be greater than the thickness of the second electrode 4. The rigidity of a material for the first electrode 2 may be greater than the rigidity of a material for the second electrode 4. The length at which the second electrode uncoated portion 41 is elongated in the widthwise direction may be greater than the length at which the first electrode uncoated portion 21 is elongated in the widthwise direction. The second electrode uncoated portion 41, as described above, may be made of a material having less rigidity than that of the first electrode uncoated portion 21, be elongated further than the first electrode uncoated portion 21 and have a thickness less than that of the first electrode uncoated portion 21. Accordingly, in the case where the uncoated portions are pressed in the axial direction, buckling is highly likely to occur to the second electrode uncoated portion 41 rather than the first electrode uncoated portion 21.

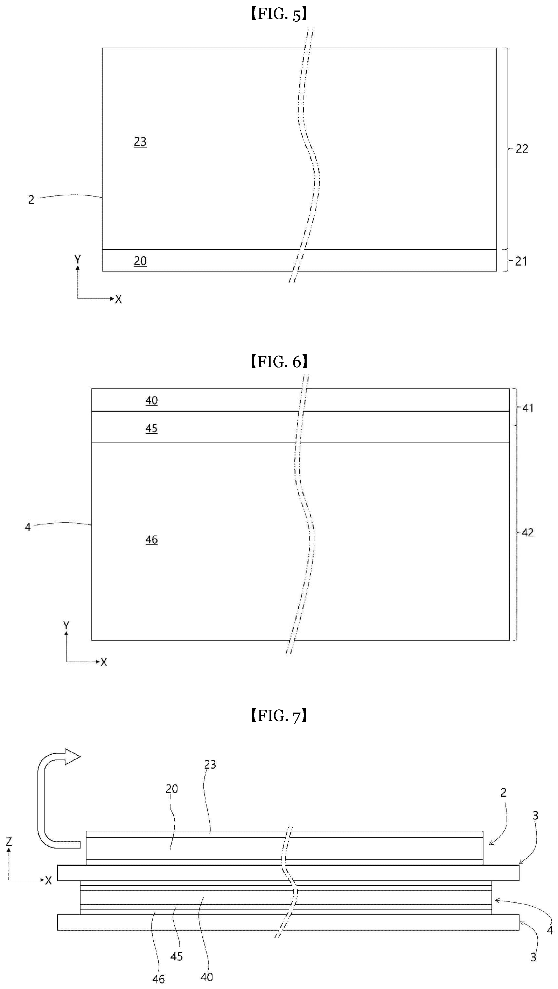

The surface area of the first electrode 2 is less than the surface area of the second electrode 4. That is, the width and length of the first electrode 2 is slightly less than those of the second electrode 4. Accordingly, the second electrode 4, as illustrated in FIG. 7, is elongated further outward than the first electrode 2 in the lengthwise direction, in the state where the first electrode 2, the first separation layer 3, the second electrode 4 and the second separation layer 3 are stacked.

The width of the first electrode coated portion 22 is also less than the width of the second electrode coated portion 42. Accordingly, the second electrode coated portion 42 is elongated further outward than the first electrode coated portion 22, in the widthwise direction or axial direction. This means that a distance at which the end portion of the other side of the first electrode 2 is disposed inward in the axial direction further than the end portion of the other side of the separation layer 3, in the axial direction, is greater than a distance at which the end portion of one side of the second electrode 4 is disposed further inward in the axial direction than the end portion of one side of the separation layer 3, in the axial direction. That is, since the end portion of the other side of the first electrode 2 in the axial direction is hidden further inside the separation layer 3 than the end portion of one side of the second electrode 4 in the axial direction, it may be thought that a short circuit between the first electrode 2 and the second electrode 4 is highly likely to occur in the end portion of one side of the electrode assembly 1, to which the first electrode uncoated portion 21 extends, in the axial direction.

However, notably, a short circuit is highly likely to occur as the second electrode uncoated portion 41 contacts the end portion of the other side of the first electrode 2 in the axial direction, while the second electrode uncoated portion 41 invades the separation layer 3 due to the buckling of the second electrode uncoated portion 41, since the second electrode uncoated portion 41 is more vulnerable to buckling than the first electrode uncoated portion 21, as described above.

The first electrode uncoated portion 21 and the second electrode uncoated portion 41, exposed respectively to both sides of the electrode assembly 1 in the axial direction, may radially bend inward, i.e., in the centripetal direction, as illustrated. The bent uncoated portions may provide a substantially planar surface facing the axial direction. A first electrode current collection plate 5 and a second electrode current collection plate 6 may respectively weld to and electrically connect to the uncoated portions that are bent and planarized at both sides of the electrode assembly in the axial direction.

In the embodiment, the second electrode current collection plate 6 welds to the bent surface of the second electrode uncoated portion 41. While the second electrode current collection plate 6 welds to the welding portion of the second electrode uncoated portion 41, the second electrode current collection plate 6 keeps contacting the second electrode uncoated portion 41. In this process, the second electrode current collection plate 6 presses the second electrode uncoated portion 41 in the axial direction.

At this time, significantly large magnitude of pressing force is applied to maintain the contact state, and the base end portion of the second electrode uncoated portion 41 is likely to experience buckling, as illustrated in FIG. 4. To prevent this from happening, an insulation coating layer 45 is formed near the base end portion of the second electrode uncoated portion 41 that is highly likely to experience buckling, in the present disclosure.

The insulation coating layer 45 may comprise a polymer resin, and a filter of an inorganic material such as Al₂O₃.

The insulation coating layer 45 improves rigidity near the base end portion of the second electrode uncoated portion 41. Accordingly, to weld the second electrode uncoated portion 41, as the second electrode uncoated portion 41 receives force axially, because of a second electrode current collection plate 6, a bottom surface 301F of a cell can 301C or a cap 307, the base end portion of the second electrode uncoated portion 41 may not be buckled.

As the insulation coating layer 45 improves the rigidity of the base end portion of the second electrode uncoated portion 41, the second electrode uncoated portion 41 and the first electrode 2 contact each other with the insulation coating layer 45 therebetween, without directly contacting each other, and the occurrence of a short circuit between the first electrode 2 and the second electrode 4 may be prevented, despite the buckling of the base end portion of the second electrode uncoated portion 41.

The insulation coating layer 45 provides bend resistance during the process of bending the second electrode uncoated portion 41 in the radial direction. Accordingly, at a time when the second electrode uncoated portion 41 bends in the radial direction, a section of the second electrode uncoated portion 41, on which the insulation coating layer 45 is coated, is not almost deformed, and the section of the second electrode uncoated portion 41, on which the insulation coating layer 45 is not coated, is mainly deformed.

The insulation coating layer 45 covers a predetermined section from a boundary portion between the second electrode coated portion 42 and the second electrode uncoated portion 41 toward the end portion of the second electrode uncoated portion 41. The insulation coating layer 45 is elongated from a position further inward than the end portion of the separation layer 3 in the axial direction thereof to a position further outward than the separation layer 3 in the axial direction thereof.

The insulation coating layer 45 also covers a micro section of the end portion of the second electrode coated portion 42 when covering the boundary portion between the second electrode coated portion 42 and the second electrode uncoated portion 41. The portion that is significantly deformed due to buckling may be the boundary portion between the second electrode coated portion 42 and the second electrode uncoated portion 41. Since the insulation coating layer 45 also covers the micro section 43 of the end portion of the second electrode coated portion 42 in the boundary portion, the insulation coating layer 45 significantly increases the buckling resistance in the boundary portion between the second electrode coated portion 42 and the second electrode uncoated portion 41.

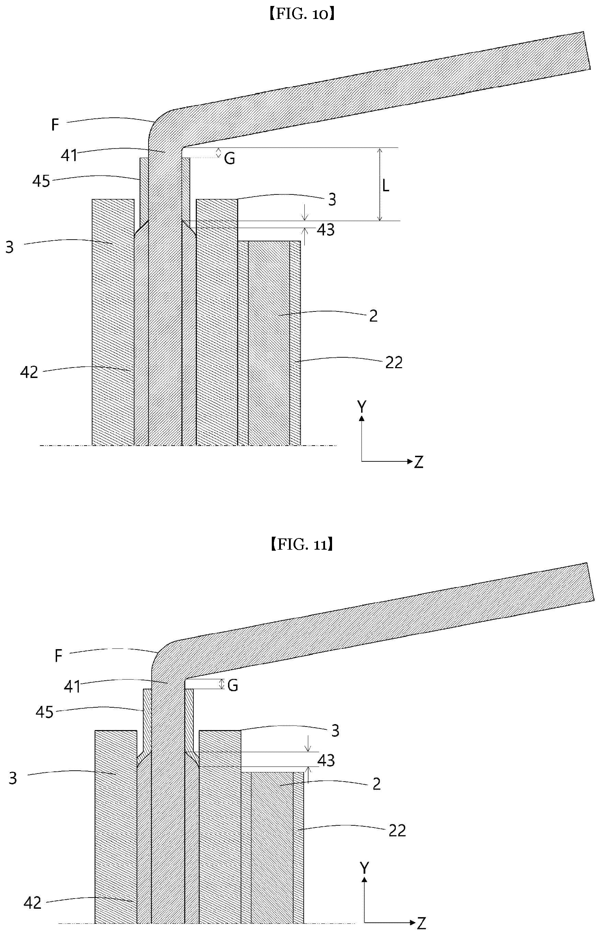

The insulation coating layer 45 is coated to have a predetermined thickness or have a thickness that changes in the axial direction. FIG. 10 shows a structure in which the thickness of the insulation coating layer 45 increases gradually in a glide section (a section in which the thickness decreases) that is formed in the end portion of a cathode active material. The insulation coating layer 45 has a constant thickness in the section that covers the second electrode uncoated portion 41.

FIG. 11 shows a structure in which the insulation coating layer 45 has a constant thickness in the glide section as well as the section that covers the second electrode uncoated portion 41.

The thickness of the insulation coating layer 45 may be less than the thickness of the cathode active material layer. Accordingly, the second electrode coated portion 42 closely contacts the separation layer 3 in the radial direction, but the insulation coating layer 45 may be spaced from the separation layer 3 to some degree, or may contact the separation layer 3 but not closely contact the separation layer 3, as illustrated.

Then during the processes of bending the second electrode uncoated portion 41 and welding the second electrode current collection plate 6 to the second electrode uncoated portion 41, even if external force is applied to the second electrode uncoated portion 41, causing the deformation of the base end portion of the second electrode uncoated portion 41, the deformation amount may be suppressed, and the deformation of the base end portion of the second electrode uncoated portion 41 does not affect the separation layer 3 immediately. That is, the second electrode uncoated portion 41 has a section which corresponds to a gap between the insulation coating layer 45 and the separation layer 3 and in which deformation is allowable without affecting the separation layer 3.

When the insulation coating layer 45 is spaced from the separation layer 3, it prevents the direct conduction of heat, which is generated during the process of welding the second electrode uncoated portion 41 to the second electrode current collection plate 6, the bottom surface 301F of the cell can 301C or the cap 307, to the separation layer 3 through the insulation coating layer 45, and protects the separation layer 3 from the welding heat. Further, since the height at which the separation layer 3 protrudes in the axial direction may be shorter with the help of the insulation coating layer 45, a distance from the position where the welding heat is generated to the axiswise end portion of the separation layer 3 may increase, ensuring improvement in the protection of the separation layer 3 from the welding heat.

Since the electrode assembly 1 is wound in a cylindrical shape, the insulation coating area of the second electrode uncoated portion 41 on which the insulation coating layer 45 is coated also has a cylindrical curved surface. The cylindrical curved surface itself has bend resistance. In the embodiments, since the insulation coating area has a cylindrical curved surface that is thicker than the second electrode uncoated portion 41, the insulation coating area provides higher bend resistance at a time when an area on the cylindrical curved surface bends in the radial direction. Thus, a portion of the second electrode uncoated portion 41, on which insulation coating is not applied, bends.

At this time, since the insulation coating area provides higher bend resistance, the insulation coating layer may exert bend resistance sufficiently, even if the thickness of the insulation coating layer 45 is less than the thickness of the cathode active material layer, and the surface of the insulation coating layer 45 is spaced from and not supported by the separation layer 3 in the radial direction.

The front end portion of the insulation coating layer 45 is coated in a way that the front end portion of the insulation coating layer 45 is spaced from the bend portion F of the second electrode uncoated portion 41 by a slight gap G. This leads the second electrode uncoated portion 41 to bend in the bend portion F. Further, since the second electrode uncoated portion 41 is deformed with a slight gap G between the second electrode uncoated portion 41 and the insulation coating layer 45, preventing damage to the insulation coating layer 45, caused by the process of bending the uncoated portion.

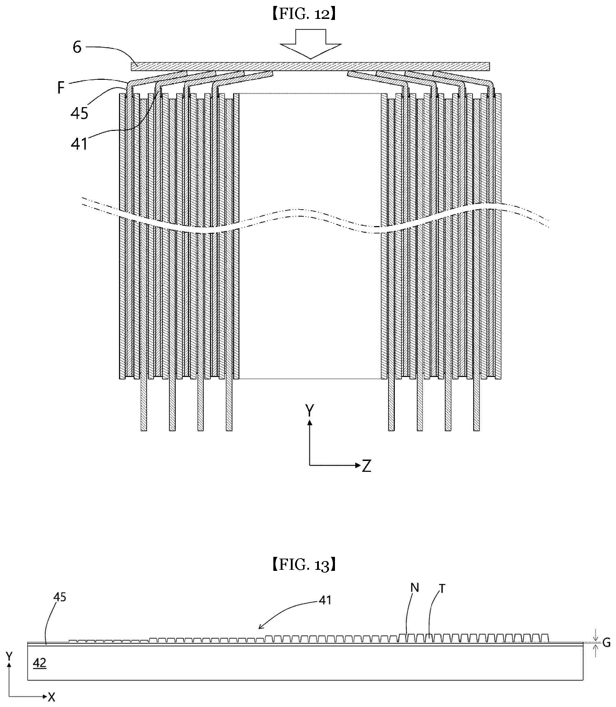

The bucking of the second electrode uncoated portion 41 provided with the insulation coating layer 45 may be prevented even if the second electrode uncoated portion is pressed by the second electrode current collection plate 6 in the axial direction, as illustrated in FIG. 12.

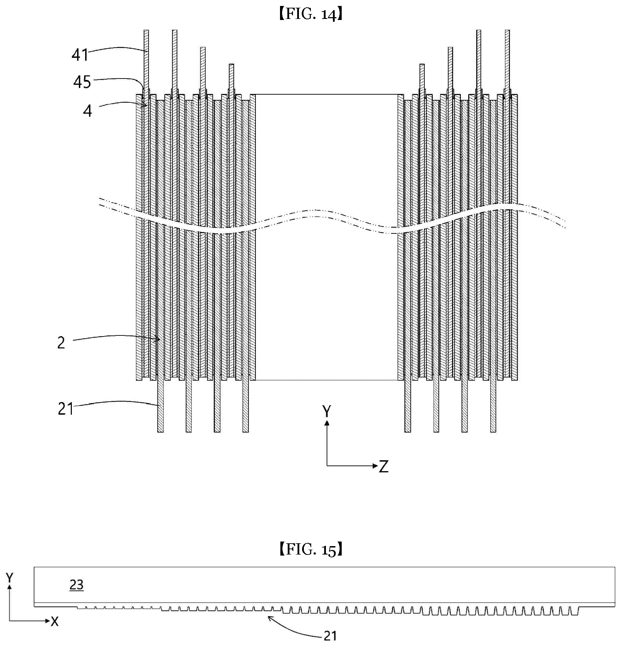

Further, the second electrode uncoated portion 41 may be provided with a bend inducing structure N, T that induces the second electrode uncoated portion 41 to bend in a predetermined position, in the axial direction. The bend inducing structure N, T may be comprised of a notch part N where the second electrode uncoated portion 41 is cut, in the axial direction, from the front end portion of the second electrode uncoated portion 41, in the axiswise section where the second electrode uncoated portion 41 needs to bend, and a notch tab T that is segmented by the notch part N. The bend inducing structure N, T may guide the bend position F of the second electrode uncoated portion 41 to the lower end portion of the notch tab T accurately. Certainly, a bend inducing structure may be applied to the first electrode uncoated portion 21 in the same way (see FIG. 15).

Referring to FIG. 13, the height of the notch tabs T of the uncoated portions increases gradually toward the outer circumference side (the right side in the drawing) of the electrode assembly from the core side (the left side in the drawing) of the electrode assembly. Then the flatness of the notch tab T may increase in the state where the notch tab T lies inward in the radial direction, because of the bend of the second electrode uncoated portion 41. Additionally, the notch tab is completely removed at the core side of the electrode assembly, such that the bend notch tab T is prevented from covering the hollow hole part of the electrode assembly 1, even if the notch tab T bends inward in the radial direction. Further, in the case where the notch tab T corresponding to the one last winding turn at the outer circumference side of the electrode assembly is removed, an unexpected deformation of the notch tab T of an outermost turn may be prevented while the electrode assembly 1 is dealt with.

The insulation coating layer 45 may be provided in a section from the boundary portion between the second electrode coated portion 42 and the second electrode uncoated portion 41 to the bend inducing structure N, T.

The insulation coating layer 45 may cover at least a partial area of the section in the axial direction.

In the embodiment, the insulation coating layer 45 is applied to the base end potion of the second electrode uncoated portion 41, for example. However, the insulation coating layer 45 can also be applied to the first electrode uncoated portion 21, certainly.

FIG. 14 shows an electrode assembly 1 formed in a way that the second electrode 4 having a notch tab T the height of which increases toward the outer circumference side of the electrode assembly, and the first electrode 2 having a first electrode uncoated portion 21 the height of which remains constant are wound, as illustrated in FIG. 13.

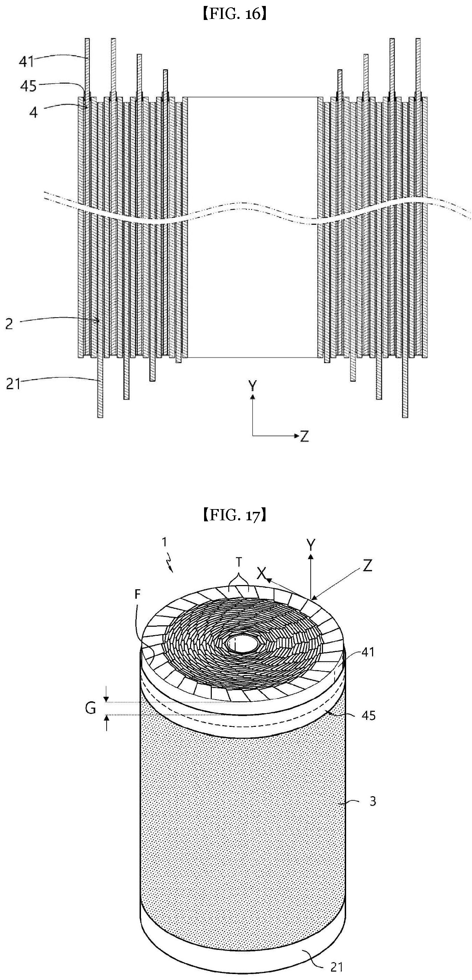

FIG. 16 shows an electrode assembly formed in a way that the second electrode 4 having a notch tab T the height of which increases toward the outer circumference side of the electrode assembly, as illustrated in FIG. 13, and the first electrode 2 having a notch tab T the height of which increases toward the outer circumference side of the electrode assembly, as illustrated in FIG. 15, are wound.

In the case where the height of the first electrode uncoated portion 21 and/or the second electrode uncoated portion 41 decreases toward the center of the electrode assembly, the hollow hole part of the winding center of the electrode assembly 1 may remain open in the axial direction as illustrated in FIG. 17, even if the first electrode uncoated portion 21 and/or the second electrode uncoated portion 41 bends in the centripetal direction, and serve as a passage through which a welding jig passes or a passage in which an electrolyte solution is injected and wet.

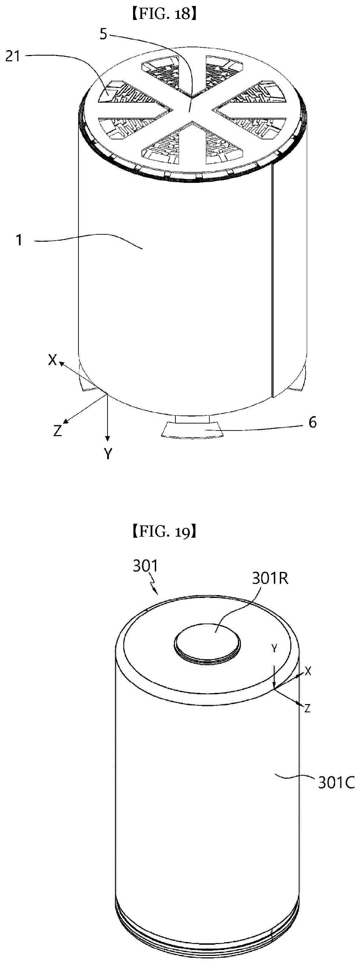

The first electrode current collection plate 5 and the second electrode current collection plate 6, as illustrated in FIG. 18, are respectively stuck and fixed to the surface of the first electrode uncoated portions 21 and the surface of the second electrode uncoated portions 41 that overlap one another, based on a method such as welding and the like.

The insulation coating layer 45 may be elongated further outward than the separation layer 3, in the axial direction. Accordingly, even if buckling occurs to the base end portion of the second electrode uncoated portion 41, the second electrode uncoated portion 41 may help to exclude the possibility of an electrical short between the second electrode uncoated portion 41 and the first electrode 2 that is adjacent to the second electrode uncoated portion 41 with the separation layer 3 between the second electrode uncoated portion 41 and the first electrode 2.

The insulation coating layer 45 may not completely cover the bend inducing structure N, T or the bend position, by a predetermined gap G. Accordingly, stress may not be delivered to the insulation coating layer 45 when a bend occurs in the bend position, such that the stress does not affect the buckling resistance of the insulation coating layer 45.

The buckling resistance of the second electrode uncoated portion in the gap G section where the insulation coating layer 45 is not formed is weaker than in the section where the insulation coating layer 45 is formed. Accordingly, even if the second electrode uncoated portion 41 experiences buckling due to the pressure applied by the second electrode current collection plate 6, buckling may be induced to the gap G section. Since the bend position is significantly far from the first electrode 2 in the axial direction, the portion where buckling is occurred is less likely to contact the first electrode 2 even if buckling occurs in the gap G section. That is, even if bucking occurs, the gap G section may be spaced from the end portion of the other side of the first electrode 2 in the axial direction by a distance long enough for the portion not to contact the first electrode 2.

The insulation coating layer 45 helps to increase the thickness of the second electrode uncoated portion 41. Accordingly, in the area covered by the insulation coating layer 45, the buckling resistance of the second electrode uncoated portion 41 increases.

Further, even if the second electrode uncoated portion 41 experiences buckling in the most unexpected insulation coating layer 45 section, it is unlikely that the portion contacts the first electrode 2, since the portion covers the insulation coating layer 45.

The insulation coating layer 45 may be coated on the uncoated portion of an electrode vulnerable to buckling with respect to the uncoated portions where buckling may occur. If the uncoated portion comprising the first electrode uncoaing 21 and the second electrode uncoated portion 41 respectively bends with respect to the bend position F, buckling occurs in a section from the bend position F to the boundary portion between the uncoated portion and the active material coated portion. The section may denote a section from the upper portion of the gap G section to the upper portion of the micro section 43 in FIG. 10. In relation to the length L of the section, the thickness t of the electrode foil, and the elastic modulus E of metal, a buckling load per unit length of the uncoated portion in the perimeter direction is inversely proportional to L², and is proportional to the elastic modulus E and a cross section secondary moment I. The cross section secondary moment I per unit length is proportional to t^{3.} The magnitude of buckling resistance of the first electrode uncoated portion 21 and the second electrode uncoated portion 41 may be determined based on Et³/ L².

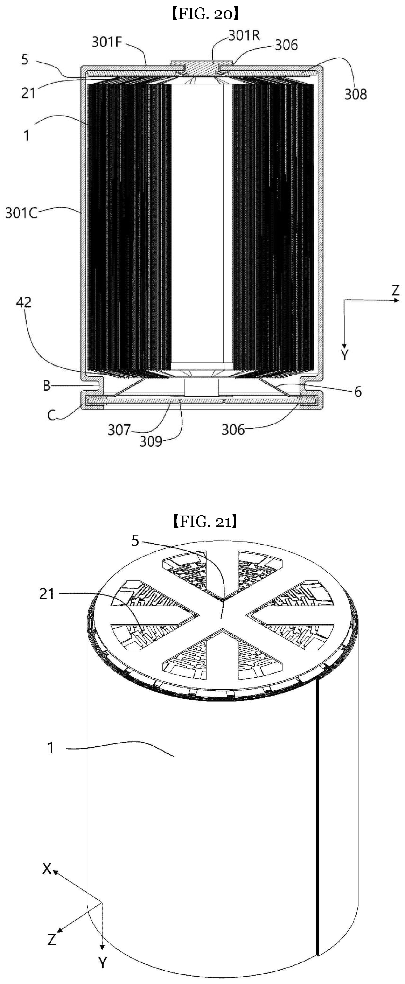

The electrode assembly 1 in FIG. 18 may be accommodated in the cell can 301C, as illustrated in FIGS. 19 and 20. The cell can 301C may connect to the second electrode current collection plate 6 of the electrode assembly 1 and constitutes a cathode terminal, and a rivet terminal 301R provided at the center of the end portion of one side of the cell can 301c may connect to the first electrode current collection plate 5 of the electrode assembly 1 and constitute an anode terminal. That is, the electrode assembly 1 may be accommodated in the cell can 301C and constitute a cylindrical battery cell 301.

Referring to FIG. 20, the peripheral portion of the first electrode current collection plate 5 welds to the first electrode uncoated portion 21, and the central portion of the first electrode current collection plate 5 welds to the electrode terminal 301R, such that the electrode terminal 301R may have the polarity of the first electrode. An insulator 308 is interposed between the first electrode current collection plate 5 and the bottom 301F of the cell can 301C, and insulates the cell can 301C from the first electrode.

Since the central portion of the second electrode current collection plate 6 is open, the hollow hole part of the winding center of the electrode assembly 1 may be exposed in the axial direction. As illustrated, a partial area of the second electrode current collection plate 6 welds to the second electrode uncoated portion 41 on which the insulation coating layer 45 is coated, and a partial area thereof is pressed against the cell can 301c or welds to the cell can 301c.

A gasket 307 is interposed between the open end portion of the cell can 301C and a cap 307, and the open end portions are finished with the cap 307. In FIG. 20, a gasket 307 is interposed between the caps 307 having a vulnerable part 309 for a venting function and a crimping part C of the cell can 301C, and is pressed fixed to the crimping part. A partial area of the second electrode uncoated portion 41 engages with the crimping part C to allow the second electrode and the cell can 301c to electrically connect.

In the embodiments, the second electrode current collection plate 6 engages with the crimping part C, as illustrated in FIG. 20, for example. However, if the second electrode can electrically connect to the cell can 301c, the second electrode current collection plate 6 may be interposed between a beading part B and the electrode assembly 1, for example. Further, the second electrode current collection plate 6 and the beading part B may be compressed and/or weld to electrically connect each other.

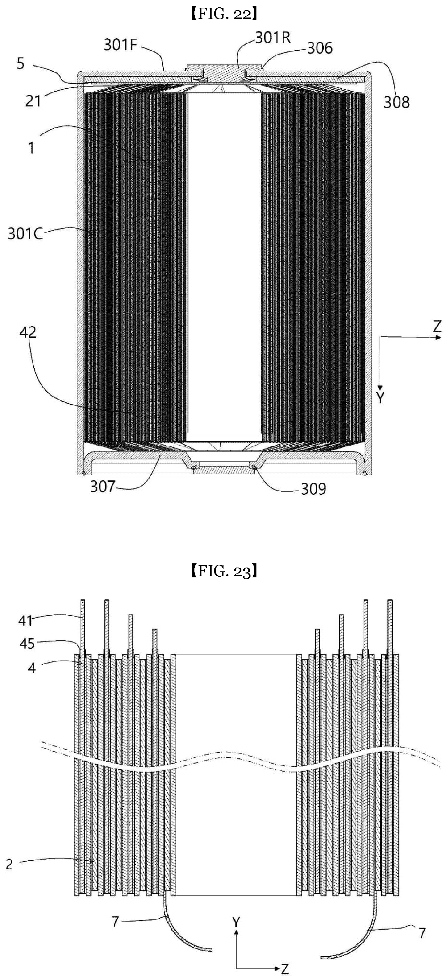

FIG. 21 shows an electrode assembly 1 in which the second electrode current collection plate 6 does not connect to the second electrode uncoated portion 41, and the first electrode current collection plate 5 only connects to the first electrode uncoated portion 21. In the structure, for example, the bend portion of the second electrode uncoated portion 41 on which the insulation coating layer 45 is coated may directly weld to the cap 307 of the cell can 301C, as illustrated in FIG. 22.

Referring to FIG. 22, the second electrode uncoated portion 41 directly welds to the cap 307. The cap 307 has the polarity of the second electrode, and the cell can 301C may also have the polarity of the second electrode. Accordingly, the cap 307 and the cell can 301C may be fixed based on a method such as welding, soldering and the like. The cap 307 has a vulnerable part 309 in the central portion thereof, and the vulnerable part 309 performs a venting function and serves as a solution injection opening.

In the embodiments, the cap 307 presses the second electrode uncoated portion 41 in the axial direction to weld the cap 307 to the second electrode uncoated portion 41. At this time, the insulation coating layer 45 is resistant against the compression by using sufficient rigidity, causing no buckling. Additionally, since the length at which the separation layer 3 protrudes in the axial direction decreases with the help of rigidity of the insulation coating layer 45, heat that is generated as the cap 307 welds to the second electrode uncoated portion 41 does not affect the separation layer 3.

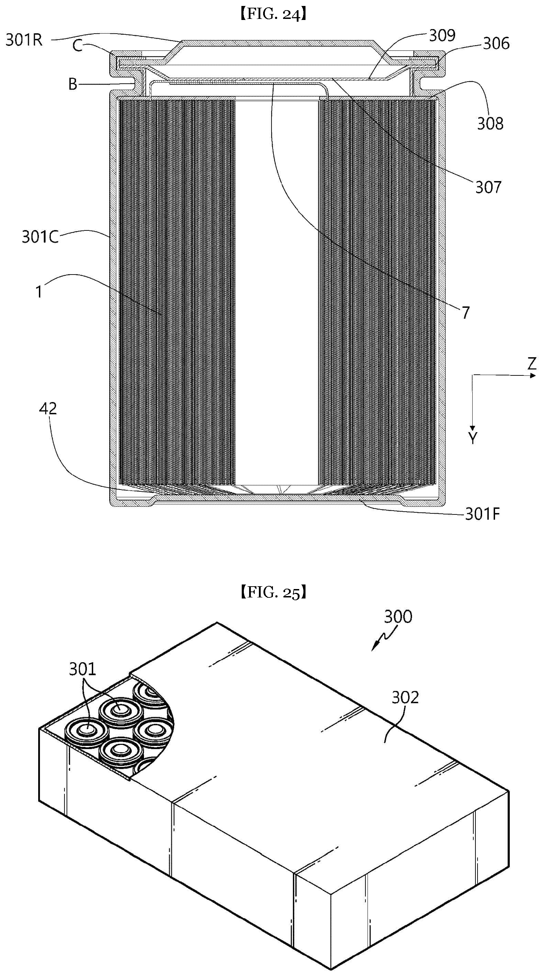

In FIGS. 23 and 24, the second electrode uncoated portion 41 directly connects to the bottom of the cell can 301C, without the second electrode current collection plate 6, after the second electrode uncoated portion 41 bends, and the first electrode 2 electrically connects to the electrode terminal 301R of the cap 307 through an electrode tab 7. In the structure, the bend portion of the second electrode uncoated portion 41 on which an insulation coating layer 45 is coated as illustrated may directly weld to the bottom surface 301F of the cell can 301C.

In the embodiments, the second electrode 4 having relatively high inner resistance may reduce significantly its inner resistance by using the second electrode uncoated portion 41 with a large number of current paths, and the first electrode 2 may reduce its inner resistance by using two or more electrode tabs 7 and a vent structure 309 may be applied to cap 307. Though not illustrated, a thermal runaway prevention structure (a current interrupt device (CID)) may be applied to the cap 307, certainly.

In the case where such a vent structure or CID structure is applied to the cap 307, a structure such as an electrode tab needs to be used to ensure ease of assembly. In the structure, in the case where the first electrode uncoated portion 21 and first electrode current collection plate 5 structures are applied to the first electrode 2 as shown in the above-described embodiments, the first electrode uncoated portion 21 and first electrode current collection plate 5 structures take up significant volume in the axial direction, failing to ensure sufficient electric capacity. To prevent this from happening, in the embodiments, the electrode tab 7 is used to connect the first electrode 2 and the electrode terminal 301R, ensuring more electric capacity.

Further, the bent first electrode uncoated portion 21 and the first electrode current collection plate 5 prevent the inner pressure of the cell can 301C from being applied to the vent structure or the CID structure, making it hard to embody functions. In the case where two or more electrode tabs 7 are used as shown in the embodiments, the inner resistance of the cell can 301C may decrease, while the electrode tabs 7 does not affect the vent function and the CID function.

FIG. 25 shows a battery pack 300 in which a battery cell 301 is accommodated in a housing 301, and battery cells connect each other in series and/or in parallel with a busbar and the like, to supply proper voltage and current.

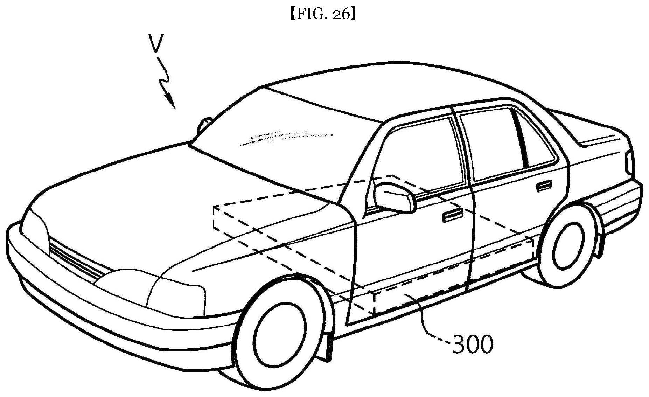

FIG. 26 shows a vehicle V equipped with the battery pack 300. The battery cell 301to which the insulation coating layer 45 in the present disclosure is applied can be used for vehicles. Further, the battery cell 301 can be used for products in various areas.

The embodiments described above are provided as examples and are not limited, in all aspects. Further, the meaning and scope of the disclosure is defined according to the claims described hereafter rather than the particulars of the detailed description, and all modifications and changes drawn from the meaning and scope of the claims and the equivalents thereof are to be construed as being included in the scope of the disclosure.

The embodiments are described above with reference to a number of illustrative embodiments thereof. However, embodiments are not limited to the embodiments and drawings set forth herein, and numerous other modifications and embodiments can be drawn by one skilled in the art within the technical scope of the disclosure. Further, the effects and predictable effects based on the configurations in the disclosure are to be included within the scope of the disclosure though not explicitly described in the description of the embodiments. In view of the foregoing disclosure, the present invention may be implemented in accordance with the following itemized embodiment examples.
Item 1 An electrode assembly (1) in which a first electrode (2) and a second electrode (4) are wound in a state where the first electrode (2) and the second electrode (4) are stacked with a separation layer (3) therebetween,
   the first electrode (2) is provided with a first electrode coated portion (22) the surface of which is coated with an active material, and
   the second electrode (4) is provided with a second electrode coated portion (42) the surface of which is coated with an active material,
   the second electrode (4), further comprising:
      a second electrode uncoated portion (41) to which an active material is not applied and which is provided in an end portion of one side of the second electrode (4) in an axial direction (a widthwise direction) thereof; and
      an insulation coating layer (45) which is coated with an insulation material in a predetermined section from a boundary portion between the second electrode coated portion (42) and the second electrode uncoated portion (41) toward an end portion of the second electrode uncoated portion (41),
      wherein the boundary portion between the second electrode coated portion (42) and the second electrode uncoated portion (41) are disposed in an axial direction, further inward than an end portion of the separation layer (3) in an axial direction thereof, and
      the insulation coating layer (45) is elongated in the axial direction further outward than the end portion of the separation layer (3) in the axial direction thereof.
Item 2 The electrode assembly of claim 1, wherein the insulation coating layer (45) also covers a micro section (43) in an end portion of the second electrode coated portion (42) when covering the boundary portion between the second electrode coated portion (42) and the second electrode uncoated portion (41).
Item 3 The electrode assembly of claim 1, wherein the insulation coating layer (45) is thinner than the second electrode coated portion (42).
Item 4 The electrode assembly of claim 1, wherein the second electrode uncoated portion (41) bends in a predetermined position (F) in a radial direction of the electrode assembly (1), and
   the bend position (F) is disposed in the axial direction further outward than the end portion of the separation layer (3).
Item 5 The electrode assembly of claim 4, wherein the insulation coating layer (45) covers at least a part of the section from the boundary portion between the second electrode coated portion (42) and the second electrode uncoated portion (41) toward the bend position (F) of the second electrode uncoated portion (41).
Item 6 The electrode assembly of claim 5, wherein the insulation coating layer (45) does not cover the second electrode uncoated portion (41) by a predetermined gap (G) from the bend position (F) in the axial direction.
Item 7 The electrode assembly of claim 4, wherein the second electrode uncoated portion (41) is provided with a notch part (N) that is formed inward in the axial direction from the end portion of the second electrode uncoated portion (41),
   a plurality of notch parts (N) is spaced from one another along a perimeter direction (a lengthwise direction) of the second electrode (4),
   the second electrode uncoated portion disposed between two notch parts (N) that are adjacent each other in a perimeter direction defines a notch tab (T), and
   the bend position (F) is disposed in a base end portion of the notch tab (T).
Item 8 The electrode assembly of claim 1, wherein the first electrode (2) is an anode, and the second electrode (4) is a cathode.
Item 9 The electrode assembly of claim 1, wherein the second electrode coated portion (42) has a greater surface area in the axial direction than the first electrode coated portion (22), and end portions of both sides of the second electrode coated portion (42) in an axial direction thereof are elongated and disposed in the axial direction further outward than end portions of both sides of the first electrode coated portion (22) in an axial direction thereof.
Item 10 The electrode assembly of claim 1, wherein the second electrode (4) is thinner than the first electrode (2).
Item 11 The electrode assembly of claim 1, wherein the first electrode (2) is provided with a first electrode uncoated portion (21) to which an active material is not applied and which is provided in an end portion of the other side of the first electrode (2) in an axial direction thereof, and
   buckling resistance of the second electrode uncoated portion (41) is less than buckling resistance of the first electrode uncoated portion (21).
Item 12 The electrode assembly of claim 1, wherein the first electrode (2) is provided with a first electrode uncoated portion (21) to which an active material is not applied and which is provided in an end portion of the other side of the first electrode (2) in an axial direction thereof, and
   a length of the second electrode uncoated portion (41) in the axial direction thereof is greater than a length of the first electrode uncoated portion (21) in an axial direction thereof.
Item 13 The electrode assembly of claim 1, wherein the insulation coating layer (45) is coated in the second electrode uncoated portion (41) area having a radius of curvature along a perimeter direction.
Item 14 The electrode assembly of claim 1, wherein the first electrode (2) is provided with an uncoated portion area to which a first active material (23) is not applied, and two or more electrode tabs (7) connect to the uncoated portion area.
Item 15 A battery cell comprising the electrode assembly (1) of any one of claims 1 to 14, and a cell can (301C) accommodating the electrode assembly (1).
Item 16 The battery cell of claim 15, wherein the second electrode uncoated portion (41) bends in the radial direction,
   the insulation coating layer (45) is thinner than the active material layer coated on the second electrode coated portion (42), and
   the bend position (F) of the second electrode uncoated portion (41) is disposed in an area that is not coated with the insulation coating layer (45).
Item 17 The battery cell of claim 16, wherein the second electrode uncoated portion (41) welds to a second electrode current collection plate (6), or directly welds to a bottom (301F) of the cell can (301C) or a cap (307).

## Claims

1. An electrode assembly (1) in which a first electrode (2) and a second electrode (4) are wound in a state where the first electrode (2) and the second electrode (4) are stacked with a separation layer (3) therebetween,
wherein the first electrode (2) is provided with a first electrode coated portion (22) the surface of which is coated with an active material, and a first electrode uncoated portion (21) to which an active material is not applied and which is provided in an end portion of one side of the first electrode (2) in an axial direction thereof,
the second electrode (4) is provided with:
a second electrode coated portion (42) the surface of which is coated with an active material;
a second electrode uncoated portion (41) to which an active material is not applied and which is provided in an end portion of the other side of the second electrode (4) in an axial direction thereof; and
an insulation coating layer (45) which is coated with an insulation material in a predetermined section from a boundary portion between the second electrode coated portion (42) and the second electrode uncoated portion (41) toward an end portion of the second electrode uncoated portion (41),
a length of the second electrode uncoated portion (41) in the axial direction thereof is greater than a length of the first electrode uncoated portion (21) in an axial direction thereof,
wherein the boundary portion between the second electrode coated portion (42) and the second electrode uncoated portion (41) are disposed further inward in an axial direction than an end portion of the separation layer (3) in an axial direction thereof, and
the insulation coating layer (45) is extended further outward in the axial direction than the end portion of the separation layer (3) in the axial direction thereof.

2. The electrode assembly of claim 1, wherein the insulation coating layer (45) also covers a micro section (43) in an end portion of the second electrode coated portion (42) when covering the boundary portion between the second electrode coated portion (42) and the second electrode uncoated portion (41).

3. The electrode assembly of claim 1 or 2, wherein the insulation coating layer (45) is thinner than the second electrode coated portion (42).

4. The electrode assembly of any one of the preceding claims, wherein the second electrode uncoated portion (41) bends in a predetermined position (F) in a radial direction of the electrode assembly (1), and
the bend position (F) is disposed in the axial direction further outward than the end portion of the separation layer (3).

5. The electrode assembly of claim 4, wherein the insulation coating layer (45) covers at least a part of the section from the boundary portion between the second electrode coated portion (42) and the second electrode uncoated portion (41) toward the bend position (F) of the second electrode uncoated portion (41).

6. The electrode assembly of claim 5, wherein the insulation coating layer (45) does not cover the second electrode uncoated portion (41) by a predetermined gap (G) from the bend position (F) in the axial direction.

7. The electrode assembly of any one of claims 4 to 6, wherein the second electrode uncoated portion (41) is provided with a notch part (N) that is formed inward in the axial direction from the end portion of the second electrode uncoated portion (41),
a plurality of notch parts (N) is spaced from one another along a perimeter direction (a lengthwise direction) of the second electrode (4),
the second electrode uncoated portion disposed between two notch parts (N) that are adjacent each other in a perimeter direction defines a notch tab (T), and
the bend position (F) is disposed in a base end portion of the notch tab (T).

8. The electrode assembly of claim 7, wherein the notch tab is removed from the core side, and
the notch tab is removed from the outer circumferential side.

9. The electrode assembly of any one of the preceding claims, wherein the first electrode (2) is an anode, and the second electrode (4) is a cathode.

10. The electrode assembly of any one of the preceding claims, wherein the second electrode coated portion (42) has a greater surface area in the axial direction than the first electrode coated portion (22), and end portions of both sides of the second electrode coated portion (42) in an axial direction thereof are extended and disposed in the axial direction further outward than end portions of both sides of the first electrode coated portion (22) in an axial direction thereof.

11. The electrode assembly of any one of the preceding claims, wherein the second electrode (4) is thinner than the first electrode (2).

12. The electrode assembly of any one of the preceding claims, wherein buckling resistance of the second electrode uncoated portion (41) is less than buckling resistance of the first electrode uncoated portion (21).

13. The electrode assembly of any one of the preceding claims, wherein the insulation coating layer (45) is coated in the second electrode uncoated portion (41) area having a radius of curvature along a perimeter direction.

14. The electrode assembly of any one of the preceding claims, wherein the second electrode coated portion (42) has a greater width in the axial direction than the first electrode coated portion (22).

15. The electrode assembly of claim 14, wherein end portions of both sides of the second electrode coated portion (42) in an axial direction thereof are extended and disposed in the axial direction further outward than end portions of both sides of the first electrode coated portion (22) in an axial direction thereof.
